# FASCICULE DE BREVET EUROPEEN

(11) **EP 4 224 022 B1**
(45) Date de publication et mention de la délivrance du brevet: **26.11.2025**
(21) Numéro de dépôt: 23153452.0
(22) Date de dépôt: 26.01.2023
(51) Int. Cl.: F16B 7/04

(54) **STRUCTURE COMPRENANT DEUX POUTRES RENDUES SOLIDAIRES L'UNE DE L'AUTRE PAR AU MOINS UN ORGANE DE CONNEXION**
STRUKTUR MIT ZWEI TRÄGERN, DIE DURCH MINDESTENS EIN VERBINDUNGSORGAN FEST MITEINANDER VERBUNDEN SIND
STRUCTURE COMPRISING TWO BEAMS MADE INTEGRAL WITH EACH OTHER BY AT LEAST ONE CONNECTING MEMBER

(30) Priorité: 03.02.2022 FR 2200943
(43) Date de publication de la demande: 09.08.2023
(73) Titulaire: SAINT-GOBAIN PLACO, 92400 Courbevoie (FR)
(72) Inventeur: KALFAYAN, Pascal, 93410 VAUJOURS (FR); GUESNET, Eric, 93410 VAUJOURS (FR); KISHTA, Ejona, 93410 VAUJOURS (FR); GOUDARD, Jerome, 92400 COURBEVOIE (FR)
(74) Mandataire: Ex Materia

(56) Documents cités:
- WO-A1-2020/108875
- NL-B1- 2 014 013
- US-A1- 2008 060 876
- US-B2- 9 151 309

## Description

La présente invention s'inscrit dans le domaine des pièces aptes à former une pièce de vie dans un espace déjà clos, et concerne plus précisément un organe de connexion entre deux poutres d'une telle pièce.

Le document US 9 151 309 B2 divulgue un assemblage comprenant une première structure et une pince. La première structure peut avoir une ouverture située sur une première surface et l'ouverture comprend une rainure de clavette. La pince est configurée pour fixer une seconde structure à la première structure.

Il est de nos jours possible de délimiter des pièces au sein même d'une zone d'un bâtiment ou d'un entrepôt, les pièces étant délimitées physiquement les unes des autres par des cloisons. Les pièces, formées par ces cloisons, comprennent généralement une ossature métallique sur laquelle sont installés des panneaux, généralement composés par de la laine de verre pris en sandwich entre deux plaques de plâtre.

Le montage de l'ossature de la pièce est un réel défi technique. En effet, il est souhaitable qu'une telle ossature doit pouvoir être monté sur n'importe quelle surface, supporter la masse des panneaux de sorte à sécuriser un espace dans lequel des utilisateurs pourront être, et prendre une forme souhaitée ou une dimension précise afin de pouvoir être installé dans des espaces dont l'architecture impose des restrictions, comme une longueur ou une hauteur précises, comme un plafond bas ou s'étendant dans un plan formant un angle différent de 90° avec au moins une cloison de la pièce. L'ensemble de ces exigences pour le montage de pièces ne peuvent être remplies avec les différents composants connus à ce jour. L'invention tente de répondre à ces problèmes en proposant un organe de connexion entre deux poutres de l'ossature autorisant un réglage dimensionnel précis de longueur d'une travée constituée de plusieurs poutres alignées et/ou une inclinaison adaptative de l'une des poutres par rapport à l'autre.

Dans ce contexte, la présente invention a pour principal objet une structure comprenant deux poutres rendues solidaires l'une de l'autre par au moins un organe de connexion selon la revendication 1.

Autrement dit, l'organe de connexion a ici pour fonction principale d'assurer la liaison entre deux poutres, ces deux poutres pouvant ensuite être utilisées pour construire une arche d'une pièce, par exemple. Cette liaison solidarise les deux poutres l'une à l'autre tout en facilitant leur réglage dans l'alignement des poutres ou en facilitant la mise en œuvre d'un angle entre les deux poutres, par exemple compris entre 45° et 315°.

Avantageusement, les deux bords pliés du corps principal sont pliés l'un vers l'autre. En d'autres termes, les bords pliés sont orientés vers la même face du corps principal. On entend par ailleurs par « bord plié » un bord s'étendant dans un plan sécant au plan dans lequel s'inscrit le corps principal.

L'ouverture quant à elle prend la forme d'une fente réalisée dans le corps principal, la fente étant de dimension suffisamment large pour accueillir l'organe de positionnement. On comprend qu'une largeur de l'ouverture, mesurée le long d'une direction perpendiculaire à la direction longitudinale entre deux bords délimitant l'ouverture, est de dimension sensiblement égale à une dimension de l'organe de positionnement mesurée selon la même direction. A contrario, la fente présente une longueur significativement plus grande qu'une longueur de l'organe de positionnement, par exemple entre 2 fois et 10 fois la longueur de cet organe de positionnement. Ces caractéristiques garantissent un blocage en largeur de l'organe de connexion par rapport à la poutre et un coulissement de cet organe de connexion par rapport à la poutre le long de la direction longitudinale de la fente.

Selon une autre caractéristique évoquée ci-dessus, l'ouverture présente une forme oblongue. Selon une caractéristique optionnelle de l'invention, le corps principal comprend plusieurs orifices répartis le long de la direction longitudinale sur le corps principal.

Selon une caractéristique optionnelle de l'invention, le corps principal comprend au moins un orifice, l'orifice et l'ouverture étant ouverts l'un sur l'autre. On entend ici qu'une même arête délimite à la fois l'orifice et l'ouverture et que les volumes délimités par l'orifice et l'ouverture sont reliés.

L'orifice est délimité par une arête du corps principal, de sorte à pouvoir par exemple accueillir un dispositif de fixation, par exemple une vis, ou encore une excroissance de la poutre.

Selon une autre caractéristique optionnelle de l'invention, l'ouverture s'étend principalement le long d'une direction parallèle à la direction longitudinale. On comprend ici que la plus grande dimension de l'ouverture s'étend parallèlement à la direction longitudinale de l'organe de connexion.

Selon une autre caractéristique optionnelle de l'invention, l'orifice présente une forme oblongue en s'étendant le long d'une direction parallèle et distincte d'une direction le long de laquelle s'étend la forme oblongue de l'ouverture.

Selon une autre caractéristique optionnelle de l'invention, l'orifice est décalé axialement par rapport à l'ouverture.

Selon une autre caractéristique optionnelle de l'invention, l'ouverture présente une dimension longitudinale représentant entre 10% et 30% d'une dimension longitudinale de l'organe de connexion. La dimension longitudinale de l'ouverture correspond à la plus grande dimension de l'ouverture mesurée le long de la direction longitudinale. Similairement, la dimension longitudinale de l'organe de connexion correspond à la plus grande dimension de l'organe de connexion mesurée le long de la direction longitudinale, et plus précisément entre ses deux extrémités longitudinales et perpendiculairement aux directions dans lesquelles s'étendent les extrémités longitudinales de cet organe de connexion.

Selon une caractéristique optionnelle de l'invention, l'ouverture présente une dimension longitudinale comprise entre 30mm et 80mm.

Selon une autre caractéristique optionnelle de l'invention, la première extrémité longitudinale et la deuxième extrémité longitudinale s'étendent au moins partiellement parallèlement l'une de l'autre, la deuxième extrémité longitudinale présentant un chanfrein, l'ouverture débouchant sur la première extrémité longitudinale. On comprend ici par chanfrein qu'une arrête entre la deuxième extrémité longitudinale et l'un des bords pliés du corps principal est tronqué.

Selon une autre caractéristique optionnelle de l'invention, l'ouverture est une première ouverture, le corps principal comprenant une deuxième ouverture distincte de la première ouverture, la deuxième ouverture étant configurée pour loger au moins partiellement un organe de positionnement longitudinal de l'organe de connexion par rapport à l'une ou l'autre des poutres, la première ouverture et la deuxième ouverture étant alignées le long d'une direction parallèle à la direction longitudinale de l'organe de connexion.

Selon une autre caractéristique optionnelle de l'invention, la deuxième ouverture présente une dimension longitudinale représentant 15% et 35% de la dimension longitudinale de l'organe de connexion. Similairement à ce qui a été mentionné auparavant, la dimension longitudinale de la deuxième ouverture correspond à la plus grande dimension de la deuxième ouverture mesurée le long de la direction longitudinale.

Selon une autre caractéristique optionnelle de l'invention, la première ouverture présente une dimension longitudinale comprise entre 30mm et 50mm.

Selon une autre caractéristique optionnelle de l'invention, la deuxième ouverture présente une dimension longitudinale comprise entre 60mm et 80mm.

Selon une autre caractéristique optionnelle de l'invention, la deuxième ouverture présente une forme oblongue entièrement fermée dans le corps principal. Autrement dit, le bord participant à délimiter la deuxième ouverture ne prolonge pas l'une des extrémités longitudinales et/ou des bords pliés du corps principal.

La présente invention concerne également une arche comportant au moins une structure telle que mentionnée ci-dessus, et dans lequel l'organe de connexion est fixé à chacune des poutres, en débordement de l'extrémité de chacune des deux poutres.

Le terme « arche » fait notamment référence à une structure prenant la forme d'un arc et dont les extrémités sont en contact du sol.

Selon une autre caractéristique optionnelle de l'invention, l'arche comprend un premier organe de connexion et un deuxième organe de connexion, le premier organe de connexion étant solidaire de l'une des poutres tandis que le deuxième organe de connexion est solidaire de l'autre poutre, le premier organe de connexion et le deuxième organe de connexion étant fixés l'un à l'autre.

Selon une alternative, un même organe de connexion relie la première poutre avec la deuxième poutre, l'organe de connexion étant par exemple vissé sur les deux poutres.

Selon une autre caractéristique optionnelle de l'invention, les deux poutres sont au moins une première poutre et une deuxième poutre s'étendant dans un prolongement longitudinal l'une par rapport à l'autre, l'arche comprenant une troisième poutre s'étendant transversalement à l'une et/ou l'autre des deux poutres, l'arche comportant un dispositif de connexion constitué de deux organes de connexion selon l'une quelconque des caractéristiques précédentes et solidarisant la troisième poutre à l'une ou l'autre des deux poutres.

Selon une autre caractéristique de l'invention, au moins un organe de connexion est installé entre chacune des poutres de l'arche de sorte à rendre solidaire l'une des poutres avec une autre poutre.

Selon une autre caractéristique optionnelle de l'invention, la première et/ou la deuxième poutre s'étend le long d'une direction sécante à la direction le long de laquelle s'étend la troisième poutre.

Selon une autre caractéristique optionnelle de l'invention, la première et/ou la deuxième poutre s'étend le long d'une direction perpendiculaire à la direction le long de laquelle s'étend la troisième poutre.

Selon une autre caractéristique optionnelle de l'invention, l'un des organes de connexion du dispositif de connexion est solidaire de la troisième poutre, l'autre organe de connexion étant solidaire de la première poutre ou de la deuxième poutre, les organes de connexion du dispositif de connexion étant solidaires l'un de l'autre.

Selon une autre caractéristique de l'invention, l'arche comprend un premier dispositif de connexion comportant deux organes de connexion, l'un des organes de connexion étant solidaire de la première poutre, l'autre organe de connexion étant solidaire de la troisième poutre, les organes de connexion du premier dispositif de connexion étant solidaires l'un à l'autre.

Selon une autre caractéristique de l'invention, l'arche comprend un deuxième dispositif de connexion comportant deux organes de connexion, l'un des organes de connexion étant solidaire de la deuxième poutre, l'autre organe de connexion étant solidaire de la troisième poutre, les organes de connexion du deuxième dispositif de connexion étant solidaires l'un à l'autre.

Selon une autre caractéristique optionnelle de l'invention, un angle mesuré entre la troisième poutre et l'une ou l'autre de la première poutre ou de la deuxième poutre est compris entre 45° et 315°, avantageusement entre 45° et 135°. La mesure de l'angle est réalisée selon l'angle formé au croisement de la direction le long de laquelle s'étend principalement la troisième poutre et de la direction le long de laquelle s'étend l'une ou l'autre de la première poutre ou de la deuxième poutre.

La présente invention a enfin pour objet une pièce autoporteuse comportant au moins une première arche et une deuxième arche selon l'une quelconque des caractéristiques précédentes, la pièce autoporteuse comprenant au moins un panneau solidaire de la première arche et de la deuxième arche. On comprend par « solidaire » le fait que le panneau est fixé à la première arche et à la deuxième arche en étant directement en contact avec chacune des deux arches.

Selon une caractéristique optionnelle de l'invention, l'assemblage de plusieurs couples d'arche telles que détaillées ci-dessus forment une ossature de la pièce autoporteuse, un panneau reliant chaque arche à une arche voisine.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation schématique d'une pièce selon l'invention ;
[Fig. 2] est une représentation en perspective d'une poutre de la pièce représentée sur la figure 1 ;
[Fig. 3] est une représentation en perspective de l'organe de connexion;
[Fig. 4] est une représentation vue de dessus d'une coopération entre l'organe de connexion représenté sur la figure 3 et deux poutres d'une pièce représentée sur la figure 1 ;
[Fig. 5] est une représentation vue de dessus d'un montage de deux organes de connexion représentés sur la figure 3 avec deux poutres d'une pièce représentée sur la figure 1 ;
[Fig. 6] est une représentation vue de dessus d'une coopération entre les deux organes de connexion et les deux poutres représentés sur la figure 5.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est couverte par les revendications.

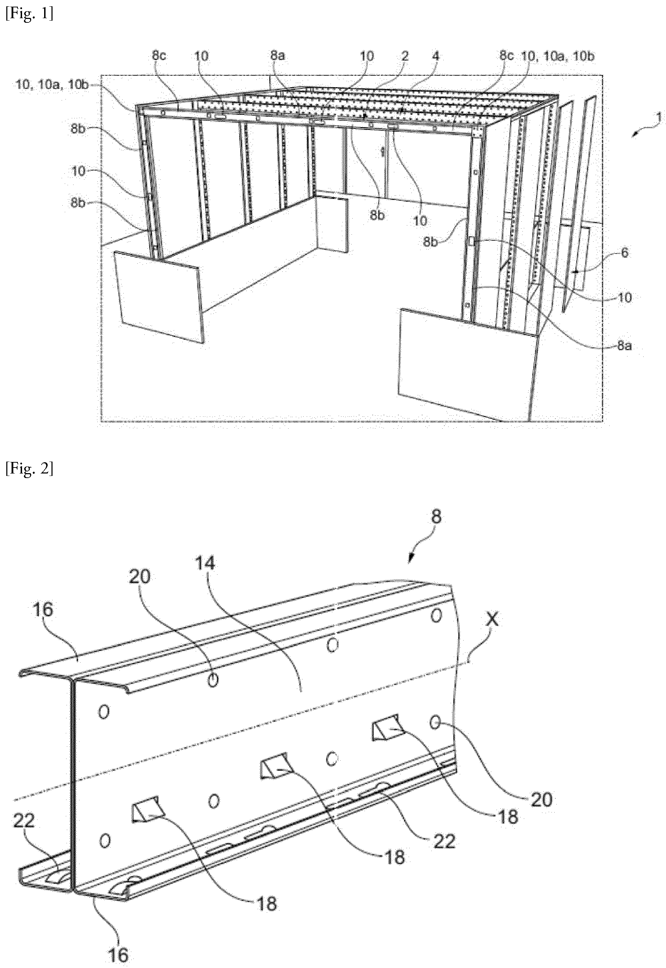

Sur les figures, les éléments communs à plusieurs figures conservent la même référence. Sur la figure 1 est illustrée une pièce 1 selon l'invention, installée avantageusement dans un espace clos tel qu'une autre pièce, un hangar ou autre. La pièce 1 est avantageusement autoporteuse, c'est-à-dire qu'elle est directement posée sur un sol sans avoir besoin d'une autre fixation, par exemple contre un mur ou un plafond. Eventuellement, la pièce 1 est fixée au sol, afin de pouvoir maintenir la position de ladite pièce 1. Cette caractéristique présente l'avantage de permettre le montage d'une telle pièce facilement dans un espace clos, sans avoir à faire de modification et/ou d'adaptation d'un ou des éléments participant à délimiter ledit espace clos. La pièce 1 comprend ici au moins une arche 2, 4, et avantageusement plusieurs arches 2, 4 installées les unes à la suite des autres en formant un tunnel. Tel que visible sur la figure 1, la pièce 1 comprend également des panneau 6 installés entre les arches 2, 4 et/ou au moins partiellement en recouvrement des arches 2, 4. Des panneaux 6 sont disposés de chaque côté des arches 2, 4 et délimitent un espace configuré pour recevoir un isolant thermique ou phonique, généralement de la laine de verre installée entre deux plaques de plâtre. Dans cette configuration, un utilisateur de la pièce amovible peut s'isoler et/ou créer un espace chauffé ou refroidi selon l'envie ou le besoin de l'utilisateur.

Préférentiellement, la pièce 1 comprend au moins une première arche 2 et une deuxième arche 4, au moins un panneau 6 solidaire étant rendu solidaire de la première arche 2 et de la deuxième arche 4. Autrement dit, le panneau 6 est fixé à la première arche 2 et à la deuxième arche 4 en étant directement en contact avec chacune des deux arches. Les arches 2, 4 assurent la tenue mécanique le long des poutres 8 et les panneaux 6 assurent la tenue mécanique des deux arches 2, 4 le long d'une direction perpendiculaire à une poutre 8 des arches 2, 4.

Par ailleurs, la pièce 1 est modulaire, c'est-à-dire que la dimension de la pièce 1 est adaptable aux dimensions souhaitées d'un utilisateur. L'installation successive de plusieurs arches 2, 4, et d'au moins un panneau 6 entre chaque arche 2, 4, permet ainsi de choisir la dimension finale de la pièce 1. Cette dernière peut ainsi comprendre au moins deux arches 2, 4 et un panneau 6 installé entre les deux arches 2, 4, tout comme elle peut comprendre plus d'arches 2, 4 et ainsi allonger la dimension de la pièce 1.

Selon l'invention, l'arche 2, 4, comprend au moins une structure qui elle comporte au moins deux poutres 8 rendues solidaires l'une de l'autre par au moins un organe de connexion 10. Cet organe de connexion 10, selon l'invention, présente notamment l'avantage d'autoriser un réglage fin de longueur des poutres 8. Ceci permet de construire une structure ou une arche 2, 4 à des dimensions extrêmement précises.

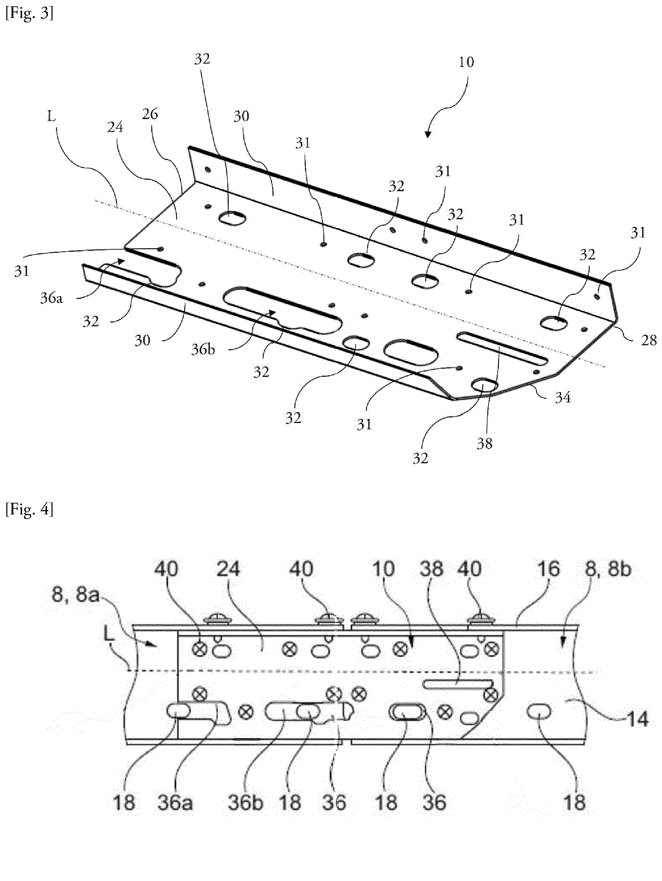

On va maintenant décrire plus en détails l'une des poutres 8 puis l'organe de connexion 10 en référence aux figures 2 et 3, avant de décrire différents exemples de coopération entre au moins l'une des poutres 8 et au moins un organe de connexion 10 de sorte à former une structure ou une arche en référence aux figures 4 à 6.

L'une des poutres 8 est représentée partiellement sur la figure 2. La poutre 8 s'étend principalement le long d'une direction principale d'extension X entre deux extrémités longitudinales, dont l'une est représentée sur la figure 2. Au moins l'une des extrémités longitudinales de la poutre 8 est configurée pour accueillir l'organe de connexion 10 selon l'invention afin d'être reliée à une autre poutre 8.

La poutre 8 comporte une paroi principale 14 et deux parois d'extension 16, la paroi principale 14 s'étendant entre les deux parois d'extension 16. Plus précisément, une section de la poutre 8 vue dans un plan perpendiculaire à la direction principale d'extension X de la poutre 8 prend globalement une forme en « I ». On comprend que la paroi principale 14 s'étend dans un plan sensiblement perpendiculaire aux plans dans lesquels s'inscrivent les parois d'extension 16, les parois d'extension 16 s'étendant chacune dans des plans sensiblement parallèles entre eux.

On comprend donc ici que la poutre 8 est un élément constitutif de la structure qui participe à la réalisation de la pièce 1. Cette poutre 8 présente une dimension d'allongement principal, ici la direction principale d'extension X. Une telle poutre présente ici une section en forme de « I », mais peut également être en forme de « C », voire deux éléments en forme de « C » fixés l'un à l'autre pour former la poutre 8 en forme de « I ». Selon d'autres alternatives, la section de la poutre peut être rectangulaire ou carré, ou éventuellement en forme de « L ».

La poutre 8 comprend au moins un organe de positionnement longitudinal 18 de l'organe de connexion 10 par rapport à la poutre 8. Selon l'invention, l'organe de positionnement longitudinal 18 prend la forme d'un ergot faisant saillie de la paroi principale 14. Par ailleurs, une dimension principale de l'organe de positionnement 18 est mesurée le long de la direction principale d'extension X de la poutre 8, cette dimension principale correspondant à la plus grande dimension de l'organe de positionnement 18.

Préférentiellement, la poutre 8 comprend plusieurs organes de positionnement longitudinal 18 installés les uns à la suite des autres le long d'une direction parallèle à de la direction principale d'extension X de la poutre 8. Encore plus préférentiellement, la poutre 8 comprend un premier groupe d'organes de positionnement longitudinal 18 faisant saillie le long d'une des faces de la paroi principale 14 et un deuxième groupe d'organes de positionnement longitudinal 18 faisant quant à eux saillie depuis l'autre face de la paroi principale 14.

La poutre 8 comprend également au moins un système de liaison 20 qui permet de relier mécaniquement deux composants en forme de « C » constitutifs de la poutre 8.

De plus, la poutre 8 comprend des pions de blocage 22 disposés sur une face de la paroi d'extension 16, et avantageusement sur la face de la paroi d'extension en regard de l'autre paroi d'extension. Avantageusement, la poutre 8 comprend un premier ensemble de pions de blocage 22 répartis le long de la direction principale d'extension X en faisant saillie de l'une des parois d'extension 16, et un deuxième ensemble de pions de blocage 22 répartis le long de la direction principale d'extension X en faisant saillie de la même paroi d'extension 16, mais en étant disposés de l'autre côté de la paroi principale 14. Ce ou ces pions de blocage 22 interviennent dans le positionnement de l'organe de connexion 10, par rapport à la poutre 8, pour à la fois faciliter le montage de l'organe de connexion dans la partie en « C » de la poutre et pour garantir un appui plan de l'organe de connexion 10 contre la paroi principale 14 de la poutre 8.

On va maintenant décrire plus en détails l'organe de connexion 10 en référence à la figure 3. L'organe de connexion 10 comporte un corps principal 24 s'étendant le long d'une direction longitudinale L en présentant une première extrémité longitudinale 26, une deuxième extrémité longitudinale 28 et deux bords pliés 30 qui s'étendent entre les deux extrémités longitudinales.

Le corps principal 24 comprend au moins un orifice 32, par exemple configuré pour loger au moins partiellement un dispositif de fixation de l'organe de connexion 10 sur l'une des poutres 8 ou pour loger une excroissance qui fait saillie d'une poutre ou encore un système de liaison 20 tel qu'évoqué ci-dessus.

Le corps principal 24 prend globalement la forme d'une paroi rectangulaire s'étendant dans un plan dans lequel s'inscrit la direction longitudinale L. En d'autres termes, une dimension de la première extrémité longitudinale 26 et/ou la deuxième extrémité longitudinale 28 étant inférieure à une dimension de l'un et/ou l'autre des bords pliés 30, la dimension de l'une et/ou l'autre des extrémités longitudinales étant mesurée le long d'une direction s'inscrivant dans le plan d'extension du corps principal 24 et perpendiculaire à la direction longitudinale L. La dimension de l'un et/ou l'autre des bords pliés 30 est mesurée le long d'une direction parallèle à la direction longitudinale L.

Selon l'invention, la première extrémité longitudinale 26 et la deuxième extrémité longitudinale 28 s'étendent au moins en partie parallèlement l'une par rapport à l'autre, la deuxième extrémité longitudinale 28 présentant un chanfrein 34 s'étendant entre la deuxième extrémité longitudinale 28 et l'un des bords pliés 30. On comprend par « chanfrein 34 » le fait que la deuxième extrémité longitudinale 28 présente une première portion s'étendant parallèlement à la première extrémité longitudinale 26, une deuxième portion s'étendant le long d'une direction s'inscrivant dans le plan principal d'extension du corps principal 24 en étant sécante à la fois à la direction le long de laquelle s'étend la première portion et à la direction longitudinale L.

Les deux bords pliés 30 du corps principal 24 sont pliés l'un vers l'autre. En d'autres termes, les bords pliés 30 sont orientés vers une même face du corps principal 24. On entend par ailleurs par « bord plié 30 » un bord s'étendant dans un plan sécant au plan dans lequel s'inscrit le corps principal 24. Dans l'exemple ici, le bord s'étend dans un plan à 90° par rapport au plan d'extension du corps principal 24.

L'orifice 32 quant à lui est délimité par une arête du corps principal 24 et il est avantageusement débouchant sur l'une et l'autre des faces du corps principal 24, mais un orifice 32 ne débouchant pas sur l'une ou l'autre des faces du corps principal 24 ne sortirait pas du cadre de l'invention.

L'orifice 32 présente une forme oblongue en s'étendant le long d'une direction parallèle à la direction longitudinale. On comprend qu'une dimension principale de l'orifice 32 est mesurée principalement le long d'une direction parallèle à la direction longitudinale L.

Cependant, un organe de connexion 10 comprenant un orifice 32 présentant une autre forme qu'oblongue ne sortirait pas du cadre de l'invention.

Préférentiellement, le corps principal 24 comprend plusieurs orifices 32 répartis le long de la direction longitudinale L sur le corps principal 24. Tel que plus particulièrement visible sur les figures 3 et 4, un premier ensemble d'orifices 32 est réparti le long d'une première direction parallèle à la direction longitudinale L et un deuxième ensemble d'orifices 32 est réparti le long d'une deuxième direction parallèle à la direction longitudinale L, le premier ensemble d'orifices 32 étant ici disposé au plus proche d'une des parois d'extension 16 tandis que le deuxième ensemble d'orifices 32 est disposé au plus proche de l'autre paroi d'extension 16.

Selon l'invention, le corps principal 24 comprend au moins une ouverture 36 configurée pour loger au moins partiellement l'organe de positionnement longitudinal 18 qui fait saillie de l'une ou l'autre des poutres 8, l'ouverture 36 débouchant sur l'une ou l'autre des extrémités longitudinales 26, 28. L'ouverture 36 prend ainsi la forme d'une fente réalisée dans le corps principal 24, la fente étant de dimension suffisamment large pour accueillir sans jeu l'organe de positionnement 18 et suffisamment longue pour que l'organe de connexion translate d'avant en arrière contre la poutre. On comprend qu'une largeur de l'ouverture 36, mesurée le long d'une direction perpendiculaire à la direction longitudinale L entre deux bords délimitant l'ouverture 36, est de dimension sensiblement égale à la dimension de l'organe de positionnement 18 mesurée selon la même direction.

Comme visible sur la figure 3 et 4, l'ouverture 36 présente une forme oblongue. On comprend qu'une dimension la plus grande de l'ouverture 36 est celle mesurée le long d'une direction parallèle à la direction longitudinale L.

L'ouverture 36 présente une dimension longitudinale représentant entre 10% et 40% d'une dimension longitudinale de l'organe de connexion 10. La dimension longitudinale de l'ouverture 36 correspond à la plus grande dimension de l'ouverture 36 mesurée le long d'une direction parallèle à la direction longitudinale L et la dimension longitudinale de l'organe de connexion 10 correspond à la plus grande dimension de l'organe de connexion 10 mesurée le long de la direction longitudinale L, c'est-à-dire sa longueur prise entre ses deux extrémités longitudinales.

Sur l'exemple illustré ici sur la figure 3, l'ouverture 36 présente une dimension longitudinale comprise entre 30mm et 80mm. Avantageusement, l'ouverture 36 présente une dimension longitudinale comprise entre 35mm et 45mm. Encore plus avantageusement, l'ouverture 36 présente une dimension de 40mm.

Selon l'invention, l'ouverture 36 débouche sur la première extrémité longitudinale 26. Cela permet notamment de pouvoir installer plus facilement l'organe de connexion 10 sur l'extrémité de la poutre 8, notamment en facilitant l'insertion par coulissement de l'organe de positionnement longitudinal 18 dans l'ouverture 36.

De plus, l'orifice 32 et l'ouverture 36 sont ouverts l'un sur l'autre. Autrement dit, une même arête délimite à la fois l'orifice 32 et l'ouverture 36. Les volumes délimités par l'orifice 32 et l'ouverture 36 sont ainsi reliés et ne forment qu'un seul et même volume. On note cependant que l'orifice 32 est décalé transversalement par rapport à l'ouverture 36, c'est-à-dire que la direction principale le long de laquelle s'étend l'orifice 32 est distincte, donc non confondue, avec la direction oblongue le long de laquelle s'étend majoritairement l'ouverture 36.

Selon une caractéristique de l'invention, l'ouverture 36 est une première ouverture 36a, le corps principal 24 comprenant une deuxième ouverture 36b distincte de la première ouverture 36a, la deuxième ouverture 36b étant configurée pour loger au moins partiellement un autre organe de positionnement longitudinal 18 de l'organe de connexion 10 par rapport à l'une ou l'autre des poutres 8, la première ouverture 36a et la deuxième ouverture 36b étant alignées le long d'une même direction parallèle à la direction longitudinale L. On comprend ici que la première ouverture 36a et la deuxième ouverture 36b sont chacune configurées pour loger au moins partiellement un organe de positionnement longitudinal 18 propre. Le logement de deux organes de positionnement longitudinal 18 optimise le guidage de l'organe de connexion 10 lors de son montage sur l'une des extrémités de la poutre 8.

Avantageusement, la deuxième ouverture 36b présente une dimension longitudinale représentant 15% et 35% de la dimension longitudinale de l'organe de connexion 10. Similairement à ce qui a été mentionné auparavant, la dimension longitudinale de la deuxième ouverture 36b correspond à la plus grande dimension de la deuxième ouverture 36b mesurée le long d'une direction parallèle à la direction longitudinale L.

Encore plus avantageusement, la deuxième ouverture 36b présente une dimension longitudinale comprise entre 60mm et 80mm. Selon un exemple de réalisation de l'invention, la deuxième ouverture 36b présente une dimension longitudinale de 70mm.

Similairement à ce qui a été décrit à propos de la première ouverture 36a, la deuxième ouverture 36b présente une forme oblongue qui, à la différence de la première ouverture 36a, est entièrement fermée dans le corps principal 24. Autrement dit, l'arête participant à délimiter la deuxième ouverture 36b est entièrement fermée.

De plus, l'organe de connexion 10 comprend une rainure 38 s'étendant le long de la direction longitudinale L et traversant avantageusement de part et d'autre le corps principal 24. La rainure 38 est ici fermée, mais selon une alternative de l'invention, la rainure 38 est ouverte sur l'une ou l'autre des extrémités longitudinales 26, 28, et avantageusement sur la deuxième extrémité longitudinale 28.

La rainure 38 est décalée transversalement par rapport à l'une ou l'autre des ouvertures 36a, 36b, c'est-à-dire que la direction le long de laquelle s'étend principalement la rainure 38 est distincte, et donc non confondu, avec la direction principale le long de laquelle s'étend principalement l'une et l'autre des ouvertures 36a, 36b.

Tel qu'illustré sur la figure 3, l'organe de connexion 10 comprend au moins un trou de fixation 31 adapté pour recevoir le système de fixation 40 de l'organe de connexion 10 à la poutre 8, le système de fixation pouvant par exemple être une vis ou un rivet. Avantageusement, l'organe de connexion 10 comprend plusieurs trous de fixation 31 disposés sur le corps principal 24 et/ou un ou des bord(s) plié(s) 30, de sorte que le dispositif de fixation 40 traverse respectivement le corps principal 24 et la paroi principale 14, et/ou le ou les bord(s) plié(s) 30 et l'une des parois d'extension 16.

On va maintenant décrire comment sont agencés les poutres 8 et l'organe de connexion 10 l'un par rapport à l'autre, par exemple pour former une structure ou une arche 2, 4, notamment en référence aux figures 4 à 6.

Une telle structure ou arche peut être fixée à un mur et/ou à un plafond d'une autre pièce qui entoure la pièce en cours de montage, sans pour autant sortir du cadre de l'invention. Il est également possible que l'arche soit autoporteuse, c'est-à-dire posée au sol, mais séparée des murs et du plafond de la pièce qui entoure la pièce en cours de montage.

Selon un premier mode de réalisation de l'invention illustré sur la figure 4, l'organe de connexion 10 est fixé à l'extrémité d'une première poutre 8a et à l'extrémité d'une deuxième poutre 8b.

Selon l'exemple, la première poutre 8a et la deuxième poutre 8b sont similaires, de sorte à pouvoir recevoir chacune l'organe de connexion 10. La première poutre 8a et la deuxième poutre 8b sont ici disposées dans le prolongement axial l'une de l'autre, c'est-à-dire que la direction le long de laquelle s'étend l'une des poutres 8 est confondue avec la direction le long de laquelle s'étend l'autre poutre 8. Ainsi, la paroi principale 14 et les parois d'extension 16 de chacun des poutres 8 s'étendent chacune respectivement dans les mêmes plans.

L'organe de connexion 10 est ici installé en recouvrement de l'une des faces des parois principales 14 de chacune des poutres 8a, 8b. Selon un exemple, les organes de positionnement longitudinal 18 des poutres 8a, 8b sont au moins partiellement logés dans les ouvertures 36a, 36b. L'organe de connexion 10 est ainsi rendu solidaire de la première poutre 8a et de la deuxième poutre 8b, l'organe de connexion 10 étant fixé à la fois à la première poutre 8a et à la deuxième poutre 8b grâce à des dispositifs de fixation 40.

Par exemple, le dispositif de fixation 40 est une vis, un rivet ou autre, et se loge au travers de l'organe de connexion 10.

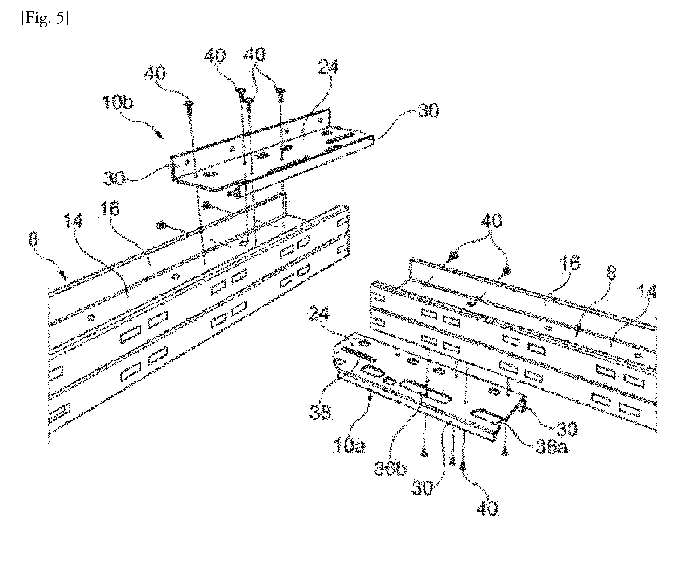

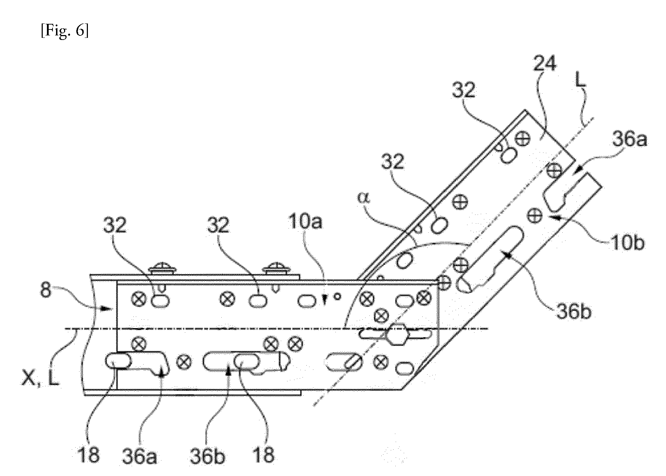

Selon un deuxième exemple de réalisation de l'invention illustré sur les figures 5 et 6, la liaison entre les deux poutres 8a, 8b est réalisée par un dispositif de connexion composé d'au moins un premier organe de connexion 10a et un deuxième organe de connexion 10b coopérant l'un avec l'autre pour rendre solidaire la première poutre 8a et la deuxième poutre 8b. Pour cela, le premier organe de connexion 10a est solidaire de l'une des poutres 8 tandis que le deuxième organe de connexion 10b est solidaire de l'autre poutre 8, le premier organe de connexion 10a et le deuxième organe de connexion 10b étant fixés l'un à l'autre.

Pour cela, et tel que plus particulièrement visible sur la figure 5, le premier organe de connexion 10a est fixé sur la première poutre 8a et le deuxième organe de connexion 10b est fixé sur la deuxième poutre 8b. Pour cela, la direction longitudinale L du premier organe de connexion 10a est confondue avec la direction principale d'extension de la première poutre 8a, tandis que la direction longitudinale L du deuxième organe de connexion 10b est confondue avec la direction principale d'extension de la deuxième poutre 8b. La direction principale d'extension de la première poutre 8a et la direction principale d'extension de la deuxième poutre 8b sont sécantes l'une de l'autre, ici selon un angle droit.

L'assemblage de ces poutres 8 est notamment permis par une fixation entre les deux organes de connexion 10a, 10b, et notamment grâce à la rainure 38 de chacun des organes de connexion 10a, 10b. On comprend ici que pour l'assemblage de deux poutres 8 s'étendant chacune le long d'une direction principale d'extension sécante à l'autre direction principale d'extension, les deux organes de connexion sont tout d'abord superposés l'un en recouvrement de l'autre en superposant la rainure 38 du premier organe de connexion 10a et la rainure 38 du deuxième organe de connexion 10b. Les rainures 38 participent à délimiter une croix dont le point de croisement forme un pivot, autour duquel l'une des deux poutres 8 pivotent pour être positionnée selon un angle prédéfini. Les organes de connexion sont rendus solidaire l'un à l'autre une fois les poutres 8 correctement positionnées l'une par rapport à l'autre.

Une configuration entre des poutres 8 et des organes de connexion 10 telle qui vient d'être décrit permet de concevoir une structure selon l'invention ou une arche 2, 4.

Préférentiellement, et tel qu'illustré sur la figure 1, l'arche 2, 4 comprend la première poutre 8a, la deuxième poutre 8b et au moins une troisième poutre 8c s'étendant transversalement à l'une et/ou l'autre des deux poutres 8, l'arche 2, 4 comportant le dispositif de connexion constitué de deux organes de connexion 10 solidarisant la troisième poutre 8c à l'une ou l'autre des deux poutres 8a, 8b. On entend ici que la première 8a et/ou la deuxième poutre 8b s'étend le long d'une direction sécante, avantageusement perpendiculaire, à la direction le long de laquelle s'étend la troisième poutre 8c, tandis que la première poutre 8a et la deuxième poutre 8b s'étendent sensiblement parallèlement l'une de l'autre.

Encore plus avantageusement, l'arche 2, 4 comprend un premier dispositif de connexion composé de deux organes de connexion 10 solidarisant la première poutre 8a et la troisième poutre 8c, et un deuxième dispositif de connexion composé de deux organes de connexion 10 solidarisant la deuxième poutre 8b et la troisième poutre 8c. L'un des organes de connexion du premier dispositif de connexion est solidaire de la première poutre 8a, l'autre organe de connexion 10 est solidaire de la troisième poutre 8c et ces organes de connexion du premier dispositif de connexion sont solidaires l'un de l'autre, ce qui permet de relier mécaniquement la première poutre 8a de la troisième poutre 8c. Similairement, l'un des organes de connexion du deuxième dispositif de connexion est solidaire de la deuxième poutre 8b, l'autre organe de connexion 10 est solidaire de la troisième poutre 8c, les organes de connexion du deuxième dispositif de connexion étant fixés l'un à l'autre de manière à solidariser la deuxième poutre 8b à la troisième poutre 8c.

Par ailleurs, un angle α mesuré entre la direction principale d'extension X de la troisième poutre 8c et la direction principale d'extension X de l'une ou l'autre de la première poutre 8a ou de la deuxième poutre 8b est compris entre 45° et 315°. De manière avantageuse, l'angle α peut également être compris entre 45° et 135°. On comprend que la disposition des rainures 38 l'une par rapport à l'autre des organes de connexion 10a, 10b permet un pivotement d'une poutre autour du pivot, adaptant ainsi l'angle α entre la troisième poutre 8c et la première et/ou deuxième poutre 8a, 8b. Cette adaptation est également permise grâce à la première ouverture 36a et à la deuxième ouverture 36b, leur dimension autorisant un réglage longitudinal de l'organe de connexion 10a, 10b par rapport à la poutre 8.

La présente invention ne saurait toutefois se limiter aux moyens et configurations décrits et illustrés ici.

## Revendications

1. Structure comprenant deux poutres (8, 8a, 8b) rendues solidaires l'une de l'autre par au moins un organe de connexion (10, 10a, 10b), l'organe de connexion (10) comportant un corps principal (24) s'étendant le long d'une direction longitudinale (L) en présentant une première extrémité longitudinale (26), une deuxième extrémité longitudinale (28) et deux bords pliés (30) qui s'étendent entre les deux extrémités longitudinales (26, 28), le corps principal (24) comprenant au moins une ouverture (36, 36a, 36b) configurée pour loger au moins partiellement un organe de positionnement longitudinal (18) de l'organe de connexion (10, 10a, 10b) par rapport à l'une ou l'autre des poutres (8), l'ouverture (36, 36a, 36b) débouchant sur l'une ou l'autre des extrémités longitudinales (26, 28) la poutre (8) comprenant au moins l'organe de positionnement longitudinal (18) de l'organe de connexion (10) par rapport à la poutre (8), **caractérisé en ce que** l'organe de positionnement longitudinal (18) prend la forme d'un ergot faisant saillie d'une paroi principale (14) de la poutre (8).

2. Structure selon la revendication précédente, dans laquelle l'ouverture (36, 36a, 36b) présente une forme oblongue.

3. Structure selon l'une quelconque des revendications précédentes, dans laquelle le corps principal (24) comprend au moins un orifice (32), l'orifice (32) et l'ouverture (36, 36a, 36b) étant ouverts l'un sur l'autre.

4. Structure selon les revendications 2 et 3, dans laquelle l'orifice (32) présente une forme oblongue en s'étendant le long d'une direction parallèle et distincte d'une direction le long de laquelle s'étend la forme oblongue de l'ouverture (36, 36a, 36b).

5. Structure selon l'une quelconque des revendications précédentes, dans laquelle l'ouverture (36, 36a, 36b) présente une dimension longitudinale représentant entre 10% et 30% d'une dimension longitudinale de l'organe de connexion (10, 10a, 10b).

6. Structure selon l'une quelconque des revendications précédentes, dans laquelle la première extrémité longitudinale (26) et la deuxième extrémité longitudinale (28) s'étendent au moins partiellement parallèlement l'une de l'autre, la deuxième extrémité longitudinale (28) présentant un chanfrein (34), l'ouverture (36, 36a, 36b) débouchant sur la première extrémité longitudinale (26).

7. Structure selon l'une quelconque des revendications précédentes, dans laquelle l'ouverture (36, 36a, 36b) est une première ouverture (36a), le corps principal (24) comprenant une deuxième ouverture (36b) distincte de la première ouverture (36a), la deuxième ouverture (36b) étant configurée pour loger au moins partiellement un organe de positionnement longitudinal (18) de l'organe de connexion (10, 10a, 10b) par rapport à l'une ou l'autre des poutres (8, 8a, 8b, 8c), la première ouverture (36a) et la deuxième ouverture (36b) étant alignées le long d'une direction parallèle à la direction longitudinale (L) de l'organe de connexion (10).

8. Structure selon la revendication précédente, dans laquelle la deuxième ouverture (36b) présente une forme oblongue entièrement fermée dans le corps principal (24).

9. Arche (2, 4) comportant une structure selon l'une quelconque des revendications précédentes, dans laquelle les deux poutres (8, 8a, 8b, 8c) sont au moins une première poutre (8a) et une deuxième poutre (8b) s'étendant dans un prolongement longitudinal l'une par rapport à l'autre, l'arche comprenant une troisième poutre (8c) s'étendant transversalement à l'une et/ou l'autre des deux poutres (8, 8a, 8b), l'arche comportant un dispositif de connexion constitué de deux organes de connexion (10, 10a, 10b) selon l'une quelconque des revendications 1 à 8 et solidarisant la troisième poutre (8c) à l'une ou l'autre des deux poutres (8, 8a, 8b).

10. Arche (2, 4) selon la revendication précédente, dans laquelle l'un des organes de connexion (10, 10a, 10b) du dispositif de connexion est solidaire de la troisième poutre (8c), l'autre organe de connexion (10, 10a, 10b) étant solidaire de la première poutre (8a) ou de la deuxième poutre (8b), les organes de connexion (10, 10a, 10c) du dispositif de connexion étant solidaires l'un de l'autre.

11. Arche (2, 4) selon l'une quelconque des revendications 9 ou 10, dans laquelle un angle (α) mesuré entre la troisième poutre (8c) et l'une ou l'autre de la première poutre (8a) ou de la deuxième poutre (8b) est compris entre 45° et 315°.

12. Pièce autoporteuse (1) comportant au moins une première arche (2) et une deuxième arche (4) selon l'une quelconque des revendications 9 à11, la pièce autoporteuse (1) comprenant au moins un panneau (6) solidaire de la première arche (2) et de la deuxième arche (4).

## Patentansprüche

1. Struktur, umfassend zwei Balken (8, 8a, 8b), die durch mindestens ein Verbindungselement (10, 10a, 10b) aneinander befestigt sind, wobei das Verbindungselement (10) einen Hauptkörper (24) umfasst, der sich entlang einer Längsrichtung (L) erstreckt und ein erstes Längsende (26), ein zweites Längsende (28) und zwei gefaltete Kanten (30) aufweist, die sich zwischen den beiden Längsenden (26, 28) erstrecken, wobei der Hauptkörper (24) mindestens eine Öffnung (36, 36a, 36b) umfasst, die so konfiguriert ist, dass sie ein Längspositionierungselement (18) des Verbindungselements (10, 10a, 10b) relativ zu dem einen oder anderen Balken (8) zumindest teilweise aufnimmt, wobei die Öffnung (36, 36a, 36b) zu dem einen oder anderen Längsende (26, 28) hin mündet und der Balken (8) zumindest das Längspositionierungselement (18) des Verbindungselements (10) relativ zu dem Balken (8) umfasst, **dadurch gekennzeichnet, dass** das Längspositionierungselement (18) hat die Form einer Nase, die von einer Hauptwand (14) des Balkens (8) absteht.

2. Struktur gemäß dem vorhergehenden Anspruch, bei dem die Öffnung (36, 36a, 36b) eine längliche Form hat.

3. Struktur nach einem der vorhergehenden Ansprüche, wobei der Hauptkörper (24) mindestens eine Öffnung (32) umfasst, wobei die Öffnung (32) und die Öffnung (36, 36a, 36b) zueinander offen sind.

4. Struktur nach den Ansprüchen 2 und 3, bei der die Öffnung (32) eine längliche Form hat, die sich entlang einer Richtung erstreckt, die parallel zu und verschieden von einer Richtung ist, entlang der sich die längliche Form der Öffnung (36, 36a, 36b) erstreckt.

5. Struktur nach einem der vorhergehenden Ansprüche, wobei die Öffnung (36, 36a, 36b) eine Längsabmessung aufweist, die zwischen 10 % und 30 % einer Längsabmessung des Verbindungselements (10, 10a, 10b) beträgt.

6. Struktur nach einem der vorhergehenden Ansprüche, bei der das erste Längsende (26) und das zweite Längsende (28) zumindest teilweise parallel zueinander verlaufen, wobei das zweite Längsende (28) eine Fase (34) aufweist und die Öffnung (36, 36a, 36b) zum ersten Längsende (26) hin mündet.

7. Struktur gemäß einem der vorhergehenden Ansprüche, wobei die Öffnung (36, 36a, 36b) eine erste Öffnung (36a) ist, wobei der Hauptkörper (24) eine zweite Öffnung (36b) umfasst, die sich von der ersten Öffnung (36a) unterscheidet, wobei die zweite Öffnung (36b) so konfiguriert ist, dass sie ein Längspositionierungselement (18) des Verbindungselements (10, 10a, 10b) relativ zu dem einen oder anderen Balken (8, 8a, 8b, 8c) zumindest teilweise aufnimmt, wobei die erste Öffnung (36a) und die zweite Öffnung (36b) entlang einer Richtung parallel zur Längsrichtung (L) des Verbindungselements (10) ausgerichtet sind.

8. Struktur gemäß dem vorhergehenden Anspruch, wobei die zweite Öffnung (36b) eine längliche Form hat, die im Hauptkörper (24) vollständig geschlossen ist.

9. Bogen (2, 4) mit einer Struktur nach einem der vorhergehenden Ansprüche, wobei die beiden Balken (8, 8a, 8b, 8c) zumindest ein erster Balken (8a) und ein zweiter Balken (8b) sind, die in Längserstreckung zueinander verlaufen, wobei der Bogen einen dritten Balken (8c) umfasst, der quer zu dem einen und/oder anderen der beiden Balken (8, 8a, 8b) verläuft, wobei der Bogen eine Verbindungsvorrichtung umfasst, die aus zwei Verbindungselementen (10, 10a, 10b) nach einem der Ansprüche 1 bis 8 besteht und den dritten Balken (8c) an dem einen oder anderen der beiden Balken (8, 8a, 8b) befestigt.

10. Bogen (2, 4) nach dem vorhergehenden Anspruch, bei dem eines der Verbindungselemente (10, 10a, 10b) der Verbindungsvorrichtung einstückig mit dem dritten Balken (8c) ist, das andere Verbindungselement (10, 10a, 10b) einstückig mit dem ersten Balken (8a) oder dem zweiten Balken (8b) ist, wobei die Verbindungselemente (10, 10a, 10c) der Verbindungsvorrichtung einstückig miteinander sind.

11. Bogen (2, 4) nach einem der Ansprüche 9 oder 10, wobei ein zwischen dem dritten Strahl (8c) und entweder dem ersten Strahl (8a) oder dem zweiten Strahl (8b) gemessener Winkel (α) zwischen 45° und 315° liegt.

12. Selbsttragendes Teil (1), umfassend mindestens einen ersten Bogen (2) und einen zweiten Bogen (4) nach einem der Ansprüche 9 bis 11, wobei das selbsttragende Teil (1) mindestens eine Platte (6) umfasst, die an dem ersten Bogen (2) und dem zweiten Bogen (4) befestigt ist.

## Claims

1. Structure comprising two beams (8, 8a, 8b) secured to each other by at least one connecting member (10, 10a, 10b), the connecting member (10) comprising a main body (24) extending along a longitudinal direction (L) having a first longitudinal end (26), a second longitudinal end (28) and two folded edges (30) which extend between the two longitudinal ends (26, 28), the main body (24) comprising at least one opening (36, 36a, 36b) configured to at least partially house a longitudinal positioning member (18) of the connecting member (10, 10a, 10b) relative to one or other of the beams (8), the opening (36, 36a, 36b) opening onto one or other of the longitudinal ends (26, 28) and the beam (8) comprising at least the longitudinal positioning member (18) of the connection member (10) relative to the beam (8), **characterized in that** the longitudinal positioning member (18) takes the form of a lug projecting from a main wall (14) of the beam (8).

2. Structure according to the preceding claim, in which the opening (36, 36a, 36b) has an oblong shape.

3. Structure according to any one of the preceding claims, wherein the main body (24) comprises at least one orifice (32), the orifice (32) and the opening (36, 36a, 36b) being open to each other.

4. Structure according to claims 2 and 3, in which the orifice (32) has an oblong shape extending along a direction parallel to and distinct from a direction along which the oblong shape of the opening (36, 36a, 36b) extends.

5. Structure according to any one of the preceding claims, wherein the opening (36, 36a, 36b) has a longitudinal dimension representing between 10% and 30% of a longitudinal dimension of the connection member (10, 10a, 10b).

6. Structure according to any one of the preceding claims, in which the first longitudinal end (26) and the second longitudinal end (28) extend at least partially parallel to each other, the second longitudinal end (28) having a chamfer (34), the opening (36, 36a, 36b) opening onto the first longitudinal end (26).

7. Structure according to any one of the preceding claims, wherein the opening (36, 36a, 36b) is a first opening (36a), the main body (24) comprising a second opening (36b) distinct from the first opening (36a), the second opening (36b) being configured to at least partially house a longitudinal positioning member (18) of the connection member (10, 10a, 10b) relative to one or other of the beams (8, 8a, 8b, 8c), the first opening (36a) and the second opening (36b) being aligned along a direction parallel to the longitudinal direction (L) of the connection member (10).

8. Structure according to the preceding claim, wherein the second opening (36b) has an oblong shape fully closed in the main body (24).

9. Arch (2, 4) comprising a structure according to any one of the preceding claims, in which the two beams (8, 8a, 8b, 8c) are at least a first beam (8a) and a second beam (8b) extending in a longitudinal extension relative to each other, the arch comprising a third beam (8c) extending transversely to one and/or the other of the two beams (8, 8a, 8b), the arch comprising a connection device consisting of two connection members (10, 10a, 10b) according to any one of claims 1 to 8 and securing the third beam (8c) to one or the other of the two beams (8, 8a, 8b).

10. Arch (2, 4) according to the preceding claim, in which one of the connection members (10, 10a, 10b) of the connection device is integral with the third beam (8c), the other connection member (10, 10a, 10b) being integral with the first beam (8a) or the second beam (8b), the connection members (10, 10a, 10c) of the connection device being integral with each other.

11. Arch (2, 4) according to any one of claims 9 or 10, wherein an angle (α) measured between the third beam (8c) and either the first beam (8a) or the second beam (8b) is between 45° and 315°.

12. Self-supporting part (1) comprising at least a first arch (2) and a second arch (4) according to any one of claims 9 to 11, the self-supporting part (1) comprising at least one panel (6) secured to the first arch (2) and the second arch (4).
